# EUROPEAN PATENT APPLICATION

(11) **EP 3 654 245 A1**
(43) Date of publication of application: **20.05.2020**
(21) Application number: 18205945.1
(22) Date of filing: 13.11.2018
(51) Int. Cl.: G06N 3/04, G06N 3/08

(54) **METHOD AND APPARATUS FOR PROCESSING SENSOR DATA**

(71) Applicant: Nokia Technologies Oy, 02610 Espoo (FI)
(72) Inventor: MATHUR, Akhil, Cambridge, Cambridgeshire CB3 0FA (GB); ISOPOUSSU, Anton, Cambridge, Cambridgeshire CB3 0FA (GB); CHANG, Youngjae, Cambridge, Cambridgeshire CB3 0FA (GB); KAWSAR, Fahim, Cambridge, Cambridgeshire CB3 0FA (GB)
(74) Representative: Nokia EPO representatives

(57) **Abstract**

Embodiments relate to method and apparatus for processing sensor data. The method comprises
- obtaining (S1) a labeled training dataset (21) and an unlabeled training dataset (22),
- training a neural network based on the labeled training dataset and the unlabeled training dataset, the neural network comprising: an encoder (4) configured for determining features based on the sensor data of a data item, a discriminator (6) configured for determining an estimation of a domain label of a data item based on the determined features, and a output module (5) configured for determining an estimation of an output label of a data item based on the determined features, wherein training the neural network comprises updating (S11) parameters of the encoder based on a comparison between the domain label and the estimated domain label of at least one data item.

## Description

### FIELD OF THE INVENTION

The present invention relates to the field of signal processing. In particular, the present invention relates to a method and an apparatus for processing sensor data.

### BACKGROUND

Machine learning, and in particular supervised learning and neural networks, are commonly used techniques for performing tasks which involve a classification or a regression. Example applications include activity recognition, monitoring of an industrial system, image processing...

The classification accuracy of a trained machine learning model depends on the content of the training dataset.

### SUMMARY

It is thus an object of embodiments of the present invention to propose a method and an apparatus for processing sensor data, which do not show the inherent shortcomings of the prior art.

Accordingly, embodiments relate to an apparatus for processing sensor data, the apparatus comprising means configured for:
- obtaining a first training dataset comprising a plurality of data items, a data item of the first training dataset comprising:
   - sensor data,
   - an output label specifying an output associated with the sensor data, and
   - a domain label specifying the first training dataset,
- obtaining a second training dataset comprising a plurality of data items, a data item of the second training dataset comprising:
   - sensor data, and
   - a domain label specifying the second training dataset,
- training a neural network based on the first training dataset and the second training dataset, the neural network comprising: an encoder configured for determining features based on the sensor data of a data item, a discriminator configured for determining an estimation of a domain label of a data item based on the determined features, and a output module configured for determining an estimation of an output label of a data item based on the determined features, wherein training the neural network comprises updating parameters of the encoder based on a comparison between the domain label and the estimated domain label of at least one data item.

In some embodiments, said means include at least one processor and at least one memory, the at least one memory storing computer program code, the at least one memory and the computer program code being configured to, with the at least one processor, cause the apparatus to at least in part perform the functions discussed above.

Embodiments also relate to a method for processing sensor data, the method comprising:
- obtaining a first training dataset comprising a plurality of data items, a data item of the first training dataset comprising:
   - sensor data,
   - an output label specifying an output associated with the sensor data, and
   - a domain label specifying the first training dataset,
- obtaining a second training dataset comprising a plurality of data items, a data item of the second training dataset comprising:
   - sensor data, and
   - a domain label specifying the second training dataset,
- training a neural network based on the first training dataset and the second training dataset, the neural network comprising: an encoder configured for determining features based on the sensor data of a data item, a discriminator configured for determining an estimation of a domain label of a data item based on the determined features, and a output module configured for determining an estimation of an output label of a data item based on the determined features, wherein training the neural network comprises updating parameters of the encoder based on a comparison between the domain label and the estimated domain label of at least one data item.

The means may be further configured for:
- selecting a batch of data items from the first training dataset and the second training dataset,
- determining an objective function based on a comparison between the domain labels and the estimated domain labels of the selected data items,
- updating parameters of the discriminator based on said objective function, wherein updated parameters of the discriminator lower the objective function, and
- updating parameters of the encoder based on said objective function, wherein updated parameters of the encoder increase the objective function.

In some embodiments, means are further configured for:
- selecting a batch of data items from the first training dataset,
- determining an objective function based on a comparison between the output labels and the estimated output labels of the selected data items,
- updating parameters of the encoder and of the output agent based on said objective function, wherein updated parameters of the encoder and the output agent lower the objective function.

The means may be further configured for determining a target machine learning model based on the trained machine learning model, wherein the target classifier comprises the encoder and the output agent of the trained machine learning model.

The means may be further configured for deploying the trained machine learning model or the target machine learning model in another apparatus.

In some embodiments, the output label of a data item is a class label which specifies a class associated with the sensor data, and the output agent is a classifier configured for determined an estimation of an output label of a data item based on the determined features.

In some embodiments, the sensor data relates to an audio signal captured in the environment of a machine, and the class label specifies an operating condition of the machine when the audio signal has been captured.

In some embodiments, the sensor data relates to movement data captured by one or more movement sensor of a user device, and the class label specifies an activity of a user when the movement data has been captured.

In some embodiments, the output label of a data item is a regression label which specifies a value associated with the sensor data, and the output agent is a regression agent configured for determined an estimation of a regression label of a data item based on the determined features.

Embodiments relates to a system comprising a training apparatus as outlined above and a monitoring apparatus storing a machine learning model determined by the training apparatus.

Embodiments also relate to a computer program comprising instructions for performing the method mentioned before when said instructions are executed by a computer. The computer program may be stored on a computer readable medium. The computer readable medium may be a non-transitory computer readable medium.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a system for processing sensor data,
Figure 2 is a block diagram of datasets and of a neural network used in the system of Figure 1,
Figure 3 is a flowchart of a method for training the neural network of Figure 2,
Figure 4 is a flowchart of a method for deploying and using the neural network of Figure 2,
Figure 5 is a block diagram illustrating an industrial monitoring use case,
Figure 6 is a block diagram illustrating a wearable sensing use case, and
Figure 7 is a structural view of an apparatus used in the system of Figure 2.

### DESCRIPTION OF EMBODIMENTS

A major challenge to widespread deployment of Machine Learning models is the diversity of operational contexts in real-world scenarios. Consider the following two scenarios:
1) Industrial automation. Imagine a Machine Learning model is to be developed for detecting when an industrial machine is malfunctioning based on the audio coming out of the machine. The labeled data for training this model will be collected from a limited set of operational scenarios (e.g., from a few factories) and it is likely that the data will not have a comprehensive information of all possible operating contexts in which the model will be deployed. As such, the real challenge is how to make this Machine Learning model generalize to wider contexts with limited amount of labeled training data.
2) Smartphone sensing: On similar lines, a Machine Learning model developed to detect human activities developed under phone-in-a-pocket assumption will work poorly when a phone is placed in a bag, hand or on an armband.

A potential solution to this problem could be to throw more and more labeled data at the problem. However, it may be difficult and extremely expensive to collect labeled dataset for all possible operational contexts. Heterogeneity in the devices and operating conditions will grow exponentially as the model is exposed to newer scenarios.

Embodiments described hereafter aim at making a trained machine learning model robust against heterogeneity of operating conditions, while limiting the need for labeled training data.

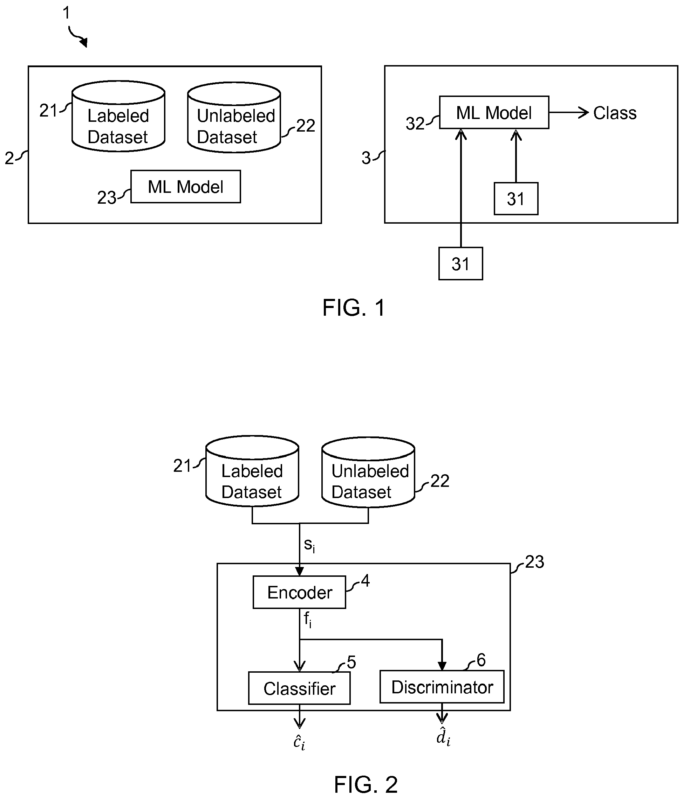

Figure 1 is a block diagram of a system 1 for processing sensor data. The system 1 comprises a training device 2, a monitoring device 3 and one or more sensors 31.

The training device 2 stores (or has access to) training data. More specifically, the training data include a labeled dataset 21 and an unlabeled dataset 22. The labeled dataset 21 and the unlabeled dataset 22 each include a plurality of data items. A data item may also be referred to as a training item, a training sample, a training example...

A data item of the labeled dataset 21 comprises:
- sensor data,
- a class label specifying a class associated with the sensor data, and
- a domain label specifying the labeled dataset.

A data item of the unlabeled dataset 22 comprises:
- sensor data,
- a domain label specifying the unlabeled dataset.

The sensor data specifies a signal captured by one or more sensors. For example, the sensor data relates to an audio signal captured by a microphone, movement data captured by a gyroscope and/or an accelerometer, location data from a positioning system, image captured by a camera... The format of the sensor data may be a vector, a matrix, a multidimensional array...

The class label specifies one of a plurality of classes associated with the sensor data. In the example of an activity recognition task, the class label specifies the activity associated with the sensor data.

The domain label specifies whether a given data item comes from the labeled dataset 21 or from the unlabeled dataset 22. Accordingly, the terminology "labeled" and "unlabeled" should be understood as referring to the presence or absence of the class label, while the domain label is specified in both datasets.

Obtaining data items for the labeled dataset 21 requires some form of labeling for specifying the classes. Depending on the application, this may involve for example manual labeling by an expert, use of an alternative classification technique... In contrast, labeling of classes is not necessary for the unlabeled dataset 22. Thus, it may be easier and/or cheaper to obtain or generate data items for the unlabeled dataset 22 than from the labeled dataset 21. Accordingly, in a typical scenario, the sensor data of the data items of the labeled dataset 21 would relate to a limited number of operational contexts. In contrast, the sensor data of the data items of the unlabeled dataset 22 may relate to a larger number of operational contexts. The domain labels may be easily added to a data item, based on the presence or absence of a class label and/or on the source of the data item.

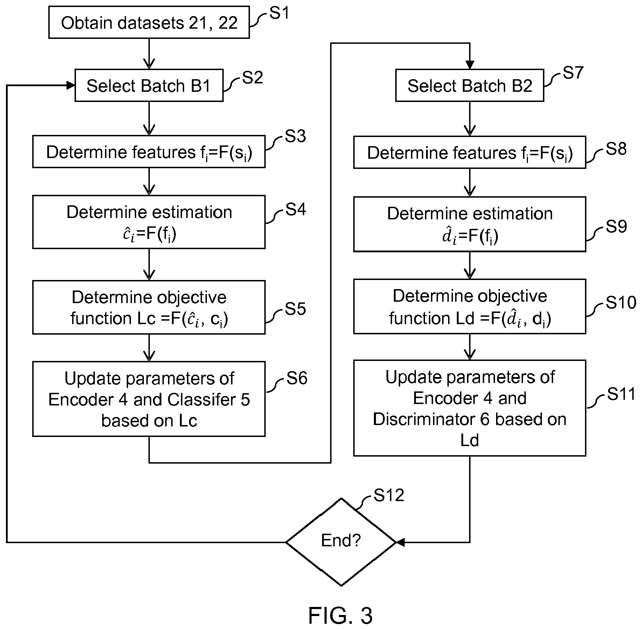

The training device 2 uses the labeled dataset 21 and the unlabeled dataset 22 to train a machine learning model 23. Once trained, the machine learning model 23 allows determining a class based on sensor data. Training of the machine learning model 23 is described in more details with reference to Figures 2 and 3.

The training device 2 may have the general architecture of a computer. The training device 2 may include a server or a group or servers, for example in a cloud infrastructure, a personal computer such as a laptop or desktop, a wearable device such as a smart phone, smart watch...

The monitoring device 3 uses a trained machine learning model 32 to process sensor data captured by one or more sensors 31. The processing involves a classification task. The trained machine learning model 32 may correspond to the machine learning model 23 of the training device 2.

A sensor 31 provides sensor data, for example audio data, movement data, position data, image data... A sensor 31 may be connected to the monitoring device 3 or included in the monitoring device 3.

The monitoring device 3 may have the general architecture of a computer. The monitoring device 3 may include a server or a group or servers, for example in a cloud infrastructure, a personal computer such as a laptop or desktop, a wearable device such as a smart phone, smart watch...

In some embodiments, training and use of the machine learning model may be performed by the same apparatus. In other words, the training device 2 and monitoring device 3 may correspond to two different apparatuses or to a single apparatus.

Figure 2 is a block diagram of datasets and of the machine learning model 23 used in the system 1.

In some embodiments, the machine learning model 23 is a neural network comprising an encoder 4, a classifier 5 and a discriminator 6. The neural network takes as input sensor data sᵢ and provides as output an estimation *ĉᵢ* of a class label associated with the sensor data sᵢ and an estimation *d̂ᵢ* of a domain label associated with the sensor data sᵢ.

The encoder 4 is configured for determining features fᵢ based on the sensor data sᵢ. The encoder 4 may comprises a plurality of neurons arranged in layers, for example convolutional layers, pooling layers, dense or fully connected layers... The features fᵢ may be regarded as an internal representation of the raw sensor data sᵢ. The format of the features fᵢ may be a vector, a matrix, a multidimensional array...

The classifier 5 is configured for determining the estimation *ĉᵢ* based on the features fᵢ. The classifier 5 may comprises a plurality of neurons arranged in layers, for example convolutional layers, pooling layers, dense or fully connected layers...

The discriminator 6 is configured for determining the estimation *d̂ᵢ* based on the features fᵢ. The discriminator 6 may comprises a plurality of neurons arranged in layers, for example convolutional layers, pooling layers, dense or fully connected layers...

Each of the encoder 4, the classifier 5 and the discriminator 6 include trainable parameters: weights, biases. The labeled dataset 21 and unlabeled dataset 22 are used for training the machine learning model 4, as described in more details with reference to Figure 3.

In some embodiments, the architecture of the neural network 23 results from adding the discriminator 6 to a neural network which comprises an encoder and a classifier. Known neural network architectures with encoder and classifier parts may be applied.

Figure 3 is a flowchart of a method for training the machine learning model 23. The method of Figure 3 may be executed at least in part by the training device 2. Training the machine learning model 23 involves updating the parameters of the machine learning model (weights and biases of the encoder 4, classifier 5 and discriminator 6), based on training data, from an initial state to a trained state. The initial state may correspond for example to a random initialization of the parameters values.

The training device 2 obtains or access the labeled dataset 21 and the labeled dataset 22 (Step S1). The labeled dataset 21 and the labeled dataset 22 may have been prepared, at least in part, by an external source and obtained by the training device 2 from the external source. Also, the training device 2 may be involved in the generation and/or preparation of the labeled dataset 21 and/or the labeled dataset 22. For example, the training device 2 may collect sensor data captured by one or more sensors, add class labels and/or domain labels to sensor data to create data items for the labeled dataset 21 and/or the labeled dataset 22...

Various options exist for training a neural network based on training data comprising a plurality of training examples: Determining the gradient of a cost function (or objective function) and backpropagation may be performed: based on the whole dataset, based on a batch of data items and iterated over several batches, or based on a single data item and iterated over several data items (this may be seen as working with a batch of size 1). Embodiments may use any of these options. The following description relates to an embodiment wherein data items of the labeled dataset 21 and the labeled dataset 22 are processed in successive batches.

Accordingly, in this embodiment, the training device 2 selects a plurality of data items from the labeled dataset 21 to form a batch B1 (Step S2). The selection may be performed for example at random.

For each data item i of the batch B1, the training device 2 determines features fᵢ based on the sensor data sᵢ, by using the encoder 4 (Step S3). Then, the training device 2 determines, based on the determined features fᵢ, an estimation *ĉᵢ* of the class label cᵢ by using the classifier 5 (Step S4).

Then, the training device 2 determines an objective function L_{c} based on a comparison of the estimations *ĉᵢ* with the class labels cᵢ (Step S5). The objective function L_{c} may correspond to a mean square error between the estimations *ĉᵢ* with the class labels cᵢ in the batch B1. The objective function L_{c} may also be referred to a cost function.

Then, the training device 2 updates the parameters of the encoder 4 and the classifier 5, based on the objective function L_{c} (Step S6). For example, the training device 2 applies gradient calculation and backpropagation techniques to update the weights and biases of the encoder 4 and classifier 5 based on the objective function L_{c}. More specifically, the parameters update may follow a classic Stochastic Gradient Descent scheme with learning rate h_{c}: The parameters of the encoder 4 and the classifier 5 are updated towards minimizing the objective function L_{c}: The loss function L_{c}, for the batch B1, is linearized at the current parameter values and the parameters are changed by a small step h_{c} in the direction of steepest descent of L_{c}.

Also, the training device 2 selects a plurality of data items from the labeled dataset 21 and the unlabeled dataset 22 to form a batch B2 (Step S7). The selection may be performed for example at random, preferably with the condition that the batch B2 comprises about the same number of data items from the labeled dataset 21 and from the labeled dataset 22. In the batch B2, a data item i comprises sensor data sᵢ and a domain label dᵢ. If the data item i comes from the labeled dataset 21, it also comprises a class label cᵢ (Although knowledge of the class label is not necessary for the discriminator training).

For each data item i of the batch B2, the training device 2 determines features fᵢ based on the sensor data sᵢ, by using the encoder 4 (Step S8). Then, the training device 2 determines, based on the determined features fᵢ, an estimation *d̂ᵢ* of the domain label dᵢ by using the discriminator 6 (Step S9).

Then, the training device 2 determines an objective function L_{d} based on a comparison of the estimations *d̂ᵢ* with the domain labels dᵢ (Step S10). The objective function L_{d} may correspond to negative log-likelihood for the domain classification. The objective function L_{d} may also be referred to a cost function.

Then, the training device 2 updates the parameters of the encoder 4 and the discriminator 6, based on the objective function L_{d} (Step S11). For example, the training device 2 applies gradient calculation and backpropagation techniques to update the weights and biases of the encoder 4 and the discriminator 6 based on the objective function L_{d}.

More specifically, for the discriminator 6, the parameters update may follow a classic Stochastic Gradient Descent scheme with learning rate h_{d}: The parameters of the discriminator 6 are updated towards minimizing the objective function L_{d}: The loss function L_{d}, for the batch B2, is linearized at the current parameter values and the parameters are changed by a small step h_{d} in the direction of steepest descent of L_{d}.

In contrast, for the encoder 4, the parameters update may follow an opposite Stochastic Gradient Descent scheme with learning rate hₑ: The parameters of the discriminator 6 are updated towards maximizing the objective function L_{d}: The loss function L_{d}, for the batch B2, is linearized at the current parameter values and the parameters are changed by a small step hₑ in the direction of greatest ascent of L_{d}. This can be achieved for example by applying a "normal" Stochastic Gradient Descent scheme with an objective function Lₑ which includes a loss term -cL_{d}, wherein c is a positive constant and L_{d} is the objective function of the discriminator 6. In some embodiments, the parameters of the encoder 4 are updated at step S6 based on the objective function L_{c} and separately at step S11 based on an objective function Lₑ = -cL_{d}. In other embodiments, the update of the parameters of the encoder 4 at step S6 and S11 are combined in a single update step and based on the objective function Lₑ which is a combination of the objective function L_{c} and of the loss term -cL_{d}, for example a sum: Le = L_{c} - c L_{d}. In the later, the computation of the linearization of L_{c} in the parameters of the classifier 5 was already done as part of the update procedure for the encoder, so the two updates can be done efficiently simultaneously.

Steps S2 to S11 are repeated in loop for successive batches until an end condition is satisfied. The end condition (step S12) may be based on one or more of:
- Comparing the number of iterations of the loop with a predefined iteration threshold,
- Comparing an elapsed time with a predefined training duration threshold,
- Amount of use of the available data items,
- ...

The order of step illustrated on Figure 3 is illustrative only. For example, in some embodiment, the batch B1 comprises or consists in the part of the batch B2 from the labelled dataset 21. In that case, steps S3 and S8 may form a single step. Also step S6 and S11 may form a single step as explained before.

In the method of Figure 3, in one training step (loop of step S2 to S11), the training device 2 is jointly updating the parameters of the encoder 4, classifier 5 and discriminator 6 based on domain labels (for the encoder 4 and the discriminator 6) as well as the class labels (for the encoder 4 and the classifier 5).

More specifically, steps S2 to S6 may be seen as an optimization of classification performances, wherein classification accuracy is improved based on classical supervised learning techniques.

Also, steps S7 to S11 may be seen as an optimization of robustness against varying operational conditions. Indeed, the feedback provided by the discriminator 6 is used to update the encoder 4 such that it will become more difficult for the discriminator 6 to determine whether a data item i comes from the labeled dataset 21 or the unlabeled dataset 22. In other words, the features fᵢ become invariant to the domain. This help the classifier 5 to classify features fᵢ regardless of the domain of the associated data item.

The method of Figure 3 alternates between the optimization of classification performances and optimization of robustness, thereby reaching a good trade-off between the two requirements. Accordingly, after training, the trained machine learning model 23 may provide classification accuracy for varying operational contexts, while training relied on labeled training samples associated with a limited number of operational contexts.

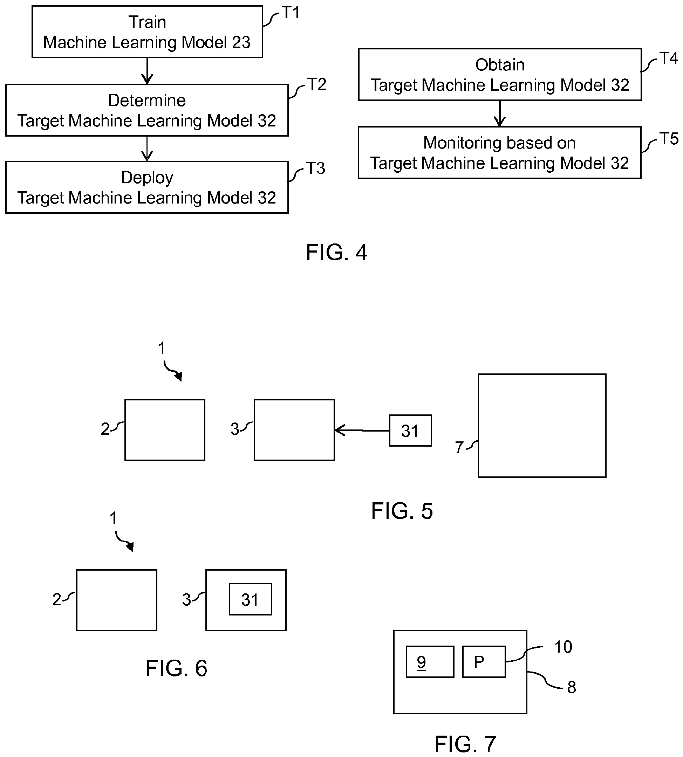

Figure 4 is a flowchart of a method for deploying and using the machine learning model 23. In this example, training and use of the trained machine learning model are performed by two distinct apparatuses, namely the training device 2 and the monitoring device 3.

The training device 2 trains the machine learning model 23 based on the labeled dataset 21 and the unlabeled dataset 22 (step T1). An example training method is described in relation with Figure 3.

Then, the training device 2 generates a target machine learning model 32 based on the trained machine learning model 23 (Step T2). The target machine learning model 32 may correspond to the trained encoder 4 and classifier 5, without the discriminator 6 which is not needed after training.

The training device 2 deploys the target machine learning model 32 in one or more monitoring device 3 (Step T3). Deploying the target machine learning model 32 may comprising sending data representative of the architecture and/or parameters of the target machine learning model 32. In some embodiments, the data representative of the architecture and/or parameters of the target machine learning model 32 is included in an application program.

The data representative of the architecture and/or parameters of the target machine learning model 32 may be sent by the training device 2 directly to one or more monitoring devices 3. In other embodiments, the training device 2 stores the target machine learning model 32 in a distribution platform, and the monitoring device 3 downloads the target machine learning model 32 from the distribution platform.

Accordingly, the monitoring device 3 receives the target machine learning model 32 (step T4).

The monitoring device 3 analysis sensor data by using the target machine learning model 32 (Step T5). The analysis involves a classification task: for given sensor data, the target machine learning model 32 output an estimated class.

The distribution platform and/or monitoring device 3 which stores data representative of the target machine learning model 32 may be regarded as a product directly obtained by the method of steps T1 to T3.

Figure 5 is a block diagram illustrating an industrial monitoring use case.

In this example, the sensor data of a data item correspond to audio signal captured in the environment of a machine 7 operating in an industrial context, for example in a factory. The class label specifies an operating condition of the machine 7 when the audio signal is captured, for example: turned off, normal operation, default type 1, default type 2...

The audio signals in the labeled dataset 21 correspond to a limited number of operating context: A limited number of types of machines from a limited number of factories. In contrast, the audio signals in the unlabeled dataset 22 correspond to a larger number of operating context: A larger number of types of machines from a larger number of factories.

The training device 2 is for example a server located in a cloud environment. The monitoring device 3 is for example a server located in a given factory wherein a machine 7 is operating. The sensor 31 is a microphone which captures the audio signal in the environment of the machine 7. The monitoring device 3 uses the target machine learning model 32 to estimate the operating condition of the machine 7 based on the audio signal provided by the microphone.

Figure 6 is a block diagram illustrating a wearable sensing use case.

In this example, the monitoring device 3 is a wearable user device, such as a smartphone or smart watch, which include one or more sensors 31 of movement such as gyroscope and/or accelerometers.

The sensor data of a data item correspond to gyroscope and/or accelerometer signal captured while a user wears the monitoring device 3. The class label specifies an activity of the user when the signal is captured, for example: sitting, walking, running, climbing...

The gyroscope and/or accelerometer signals in the labeled dataset 21 correspond to a limited number of operating context: Smart phone held in a pocket or smart watch wear at the wrist. In contrast, the gyroscope and/or accelerometer signals in the unlabeled dataset 22 correspond to a larger number of operating context: Smart phone or smart watch held or wear at various body positions.

Figure 7 is a structural view of an apparatus 8, according to some embodiments. The apparatus 8 may correspond to the training device 2, the monitoring device 3 or a combination thereof. The apparatus 8 comprises at least one processor 9 and at least one memory 10. The at least one memory 10 stores computer program code P. The at least one memory 10 and the computer program code P are configured to, with the at least one processor 9, cause the apparatus 8 to perform, at least in part, the method of Figure 3 and/or Figure 4.

Embodiments have been described in relation with a classification task. In other embodiments, other machine learning tasks are applied. Accordingly, more generally, a data item of the labeled dataset can comprise an output label associated with the sensor data, and the machine learning model comprises an output module configured for determined an estimation of the output label based on the features from the encoder. For example, for a regression task, the output label specifies an output value associated with the sensor data, and the machine learning model comprises a regression agent for determining an estimation of the output value based on the determined features.

In the context of this description, a machine learning model is a function for outputting an output based on an input, which depends on trainable parameters. An example of machine learning model is a neural network, with weights and biases as parameters. Training the machine learning model is the task of determining the parameters of the model based on training data.

It should be noted that although examples of methods have been described with a specific order of steps, this does not exclude other implementations. In particular, the described steps may be executed in another order, partially or totally in parallel...

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

While the principles of the invention have been described above in connection with specific embodiments, it is to be clearly understood that this description is made only by way of example and not as a limitation on the scope of the invention, as defined in the appended claims.

## Claims

1. Apparatus (2, 3, 8) for processing sensor data, the apparatus comprising means configured for:
- obtaining (S1) a first training dataset (21) comprising a plurality of data items, a data item of the first training dataset comprising:
- sensor data,
- an output label specifying an output associated with the sensor data, and
- a domain label specifying the first training dataset,
- obtaining (S1) a second training dataset (22) comprising a plurality of data items, a data item of the second training dataset comprising:
- sensor data, and
- a domain label specifying the second training dataset,
- training a neural network based on the first training dataset and the second training dataset, the neural network comprising: an encoder (4) configured for determining features based on the sensor data of a data item, a discriminator (6) configured for determining an estimation of a domain label of a data item based on the determined features, and a output module (5) configured for determining an estimation of an output label of a data item based on the determined features, wherein training the neural network comprises updating (S11) parameters of the encoder based on a comparison between the domain label and the estimated domain label of at least one data item.

2. Apparatus according to claim 1, wherein said means are further configured for:
- selecting (S7) a batch (B2) of data items from the first training dataset and the second training dataset,
- determining (S10) an objective function (L_{d}) based on a comparison between the domain labels and the estimated domain labels of the selected data items,
- updating (S11) parameters of the discriminator (6) based on said objective function (L_{d}), wherein updated parameters of the discriminator lower the objective function (L_{d}), and
- updating (S11) parameters of the encoder based on said objective function (L_{d}), wherein updated parameters of the encoder increase the objective function (L_{d}).

3. Apparatus according to any one of claims 1 and 2, wherein said means are further configured for:
- selecting (S2) a batch (B1) of data items from the first training dataset,
- determining (S5) an objective function (L_{c}) based on a comparison between the output labels and the estimated output labels of the selected data items,
- updating (S6) parameters of the encoder and of the output agent based on said objective function (L_{c}), wherein updated parameters of the encoder and the output agent lower the objective function (L_{c}).

4. Apparatus according to any one of claims 1 to 3, wherein said means are further configured for:
- determining (T2) a target machine learning model (32) based on the trained machine learning model (23), wherein the target classifier comprises the encoder and the output agent of the trained machine learning model.

5. Apparatus according to any one of claims 1 to 4, wherein said means are further configured for:
- deploying (T3) the trained machine learning model or the target machine learning model in another apparatus (3).

6. Apparatus according to any one of claims 1 to 5, wherein the output label of a data item is a class label which specifies a class associated with the sensor data, and the output agent is a classifier configured for determined an estimation of an output label of a data item based on the determined features.

7. Apparatus according to claim 6, wherein the sensor data relates to an audio signal captured in the environment of a machine (7), and the class label specifies an operating condition of the machine when the audio signal has been captured.

8. Apparatus according to claim 6, wherein the sensor data relates to movement data captured by one or more movement sensor of a user device, and the class label specifies an activity of a user when the movement data has been captured.

9. Apparatus according to any one of claims 1 to 5, wherein the output label of a data item is a regression label which specifies a value associated with the sensor data, and the output agent is a regression agent configured for determined an estimation of a regression label of a data item based on the determined features.

10. System (1) comprising a training apparatus (2) according to any one of claims 1 to 9 and a monitoring apparatus (3) storing a machine learning model (23, 32) determined by the training apparatus.

11. Method for processing sensor data, executed by an apparatus, the method comprising:
- obtaining (S1) a first training dataset (21) comprising a plurality of data items, a data item of the first training dataset comprising:
- sensor data,
- an output label specifying an output associated with the sensor data, and
- a domain label specifying the first training dataset,
- obtaining (S1) a second training dataset (22) comprising a plurality of data items, a data item of the second training dataset comprising:
- sensor data, and
- a domain label specifying the second training dataset,
- training a neural network based on the first training dataset and the second training dataset, the neural network comprising: an encoder (4) configured for determining features based on the sensor data of a data item, a discriminator (6) configured for determining an estimation of a domain label of a data item based on the determined features, and a output module (5) configured for determining an estimation of an output label of a data item based on the determined features, wherein training the neural network comprises updating (S11) parameters of the encoder based on a comparison between the domain label and the estimated domain label of at least one data item.

12. Method according to claim 11, further comprising determining (T2) a target machine learning model (32) based on the trained machine learning model (23), wherein the target machine learning model comprises the encoder and the output agent of the trained machine learning model.

13. Method according to any one of claims 11 and 12, further comprising deploying (T3) the trained machine learning model or the target machine learning model in another apparatus (3).

14. Computer program (P) comprising instructions for performing the method of any one of claims 11 to 13 when said instructions are executed by a computer.
